**Europäisches Patentamt**

(19) **European Patent Office**

**Office européen des brevets**

(11) Numéro de publication: **0 051 025**
**B1**

(12) # FASCICULE DE BREVET EUROPEEN

(45) Date de publication du fascicule du brevet:
**27.03.85**

(51) Int. Cl.⁴: **B 23 K 11/22**, B 26 F 3/06

(21) Numéro de dépôt: **81401661.4**

(22) Date de dépôt: **21.10.81**

(54) **Dispositif de fractionnement de pièces métalliques.**

(30) Priorité: **23.10.80 FR 8022683**

(43) Date de publication de la demande:
**05.05.82 Bulletin 82/18**

(45) Mention de la délivrance du brevet:
**27.03.85 Bulletin 85/13**

(84) Etats contractants désignés:
**BE DE GB IT**

(56) Documents cités:
**EP - A - 0 001 557**

(73) Titulaire: **COMMISSARIAT A L'ENERGIE ATOMIQUE
Etablissement de Caractère Scientifique Technique et
Industriel, 31/33, rue de la Fédération, F-75015 Paris (FR)**

(72) Inventeur: **Brochier, Michel, 5, Les Hauts de Villeneuve
Haute Jarrie, F-38560 Jarrie (FR)**
Inventeur: **Chavand, Jean, 31, rue du Colonel Bougault,
F-38100 Grenoble (FR)**

(74) Mandataire: **Mongrédien, André et al, c/o
BREVATOME 25, rue de Ponthieu, F-75008 Paris (FR)**

BUNDESDRUCKEREI BERLIN

## Description

La présente invention concerne un dispositif de fractionnement de pièces métalliques. Elle s'applique au fractionnement de pièces métalliques en vue de leur conditionnement, de leur recyclage ou de leur stockage.

On sait fractionner des matériaux ou des pièces métalliques, en utilisant des broyeurs, des cisailles et, d'une manière générale des machines à découper mécaniques ou thermiques. Les machines thermiques peuvent être des chalumeaux découpeurs ou des torches à plasma par exemple. Elles peuvent aussi être de type thermoélectrique, tel que décrit dans la demande de brevet EP-A-0 001 557. Ce type de machine ne permet pas un fractionnement multiple de pièces. De plus, sa mise en oeuvre est peu pratique puisque la pièce à couper doit être maintenue sur un support. Ces différentes machines ont aussi pour inconvénient de s'user rapidement; dans le cas des machines mécaniques, lorsque des objets filiformes (fils, petits tubes, ressorts . . .) doivent être fractionnés, il se produit souvent des coincements de ces objets dans les parties mobiles de la machine, qui servent au cisaillement. Ces machines sont de plus d'un entretien très difficile, notamment en milieu hostile (toxique, poussièreux . . .).

La présente invention a pour but de remédier à ces inconvénients et notamment de réaliser un dispositif de fractionnement de pièces métalliques, de type thermoélectrique, grâce auquel on évite tout coincement des pièces à fractionner, ce dispositiv pouvant en outre fonctionner en milieu hostile.

L'invention a pour objet un dispositif de fractionnement de type thermoélectrique de pièces métalliques filiformes en barre ou en tube, comprenant au moins deux supports conducteurs reliés à une source électrique d'alimentation et aptes à soutenir au moins partiellement la pièce à fractionner, caractérisé en ce que ladite pièce vient tomber sur les supports pour être fractionnée simultanément en plusieurs fragments, les supports conducteurs étant constitués par deux peignes dont les dents sont respectivement imbriquées pour former une trémie recevant la pièce à fractionner par contact avec au moins une partie des dents de deux peignes.

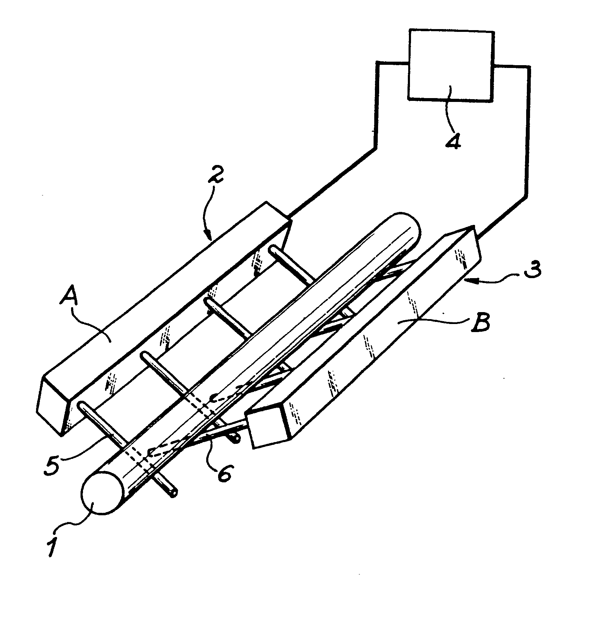

Les caractéristiques et avantages de l'invention ressortiront mieux de la description qui va suivre, donnée en référence à la figure annexée qui représente schématiquement un dispositif conforme à l'invention.

Ce dispositif permet le fractionnement de pièces métalliques telles que la pièces 1, d'allure filiforme; il comprend au moins deux supports 2, 3 conducteurs reliés à une source électrique d'alimentation 4; ces conducteurs sont aptes à soutenir au moins partiellement la pièce à fractionner. Dans ce premier mode de réalisation les deux supports 1, 2 sont constitués par des peignes dont les dents 5, 6 sont imbriquées de manière à donner à l'ensemble une forme de trémie. Tout objet métallique et notamment toute pièce métallique filiforme tombant dans cette trémie provoque un court-circuit entre les dents des deux peignes; cet objet se trouve ainsi fractionné soit par effet Joule, soit par étincelage. Le dispositif de l'invention, dans ce premier mode de réalisation, a pour avantage d'être très simple, d'entretien très facile et peut fonctionner en milieu hostile. Il permet par exemple le fractionnement d'un fil d'acier inoxydable présentant un diamètre de 1 millimètre, en une pluralité de morceaux d'une longueur de 3 centimètres environ. Les barres A et B des peignes 2, 3 sont en laiton tandis que les dents 5, 6 sont en graphite par exemple. Ce dispositif peut permettre le conditionnement, en fragments multiples de fils métalliques ou des tubes ayant été en contact avec des produits toxiques.

Le dispositif qui vient d'être décrit permet de conditionner par exemple des fils métalliques ou des tubes d'échangeurs par exemple.

## Revendication

Dispositif de fractionnement de type thermoélectrique de pièces métalliques filiformes (1) en barre ou en tube, comprenant au moins deux supports conducteurs (5, 6) reliés à une source électrique d'alimentation (4) et aptes à soutenir au moins partiellement la pièce à fractionner (1) caractérisé en ce que ladite pièce vient tomber sur les supports pour être fractionnée simultanément en plusieurs fragments, les supports conducteurs étant constitués par deux peignes (2, 3) dont les dents (5, 6) sont respectivement imbriquées pour former une trémie recevant la pièce à fractionner par contact avec au moins une partie des dents des deux peignes.

## Patentanspruch

Trennanordnung vom thermoelektrischen Typ für drahtförmige massive oder hohle Metallstükke (1), bestehend aus wenigstens zwei leitfähigen Trägern (5, 6), die mit einer elektrischen Versorgungsquelle (4) verbunden sind und dazu eingerichtet sind, wenigstens teilweise das zu zertrennende Stück (1) zu tragen, dadurch gekennzeichnet, daß das Stück auf die Träger aufgelegt wird, um gleichzeitig in mehrere Teilstücke zertrennt zu werden, die leitfähigen Träger von zwei Kämmen (2, 3) gebildet sind, deren Zinken (5, 6) gegeneinander verschachtelt angeordnet sind, um eine Rinne zu bilden, die das zu zertrennende Stück durch Berührung mit wenigstens einem Teil der Zinken der zwei Kämme aufnimmt.

**Claim**

Cutting apparatus of the thermo-electric type for elongated metallic bodies (1) in the form of bars or tubes, comprising at least two conductive supports (5, 6) connected to an electrical supply means (4) and adapted to support at least partially a member to be sub-divided (1) characterized in that said member falls onto the supports to be sub-divided simultaneously into several fragments, the conductive supports being constituted by two combs (2, 3) whose teeth (5, 6) are respectively interlocked to form a hopper receiving the piece to be sub-divided by contact with at least one portion of the teeth of the two combs.